# EUROPEAN PATENT APPLICATION

(11) **EP 4 738 779 A1**
(43) Date of publication of application: **06.05.2026**
(21) Application number: 24854436.3
(22) Date of filing: 12.08.2024
(51) Int. Cl.: H04L 43/08, H04L 43/06, H04L 43/16, H04L 67/53, H04L 43/065, H04L 43/067, H04L 67/52

(54) **METHOD AND APPARATUS FOR SUPPORTING ENERGY USAGE MONITORING IN WIRELESS COMMUNICATION SYSTEM**

(30) Priority: 11.08.2023 KR 20230105508; 01.02.2024 KR 20240015572
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); PARK, Jungshin, Suwon-si, Gyeonggi-do 16677 (KR); LEE, Hoyeon, Suwon-si, Gyeonggi-do 16677 (KR)
(74) Representative: Nederlandsch Octrooibureau
(86) International application number: PCT/KR2024/011983
(87) International publication number: WO 2025/037885

(57) **Abstract**

The disclosure relates to a 5G or 6G communication system for supporting a higher data transmission rate. According to the present disclosure, a first entity: receives, from a second entity, a request message for collecting information regarding energy consumption; transmits a message for energy monitoring to a session management function (SMF) entity; receives a response message for the energy monitoring from the SMF entity; and transmits a response message including an energy monitoring result as a response to the request message for collecting the information regarding the energy consumption. Therefore, a method for efficiently monitoring energy usage in a wireless communication system may be provided.

## Description

### [Technical Field]

The present disclosure relates to a method and apparatus for providing energy usage monitoring in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

### [Disclosure]

### [Technical Problem]

The present disclosure is directed to providing a method for monitoring energy usage in a 5G system.

### [Technical Solution]

According to an embodiment of the present disclosure, a method performed by a first entity for collecting information on energy consumption in a wireless communication system may include: receiving a request message for collecting the information on the energy consumption from a second entity; transmitting a message for energy monitoring to a session management function (SMF) entity; receiving a response message for the energy monitoring from the SMF entity; and transmitting a response message including an energy monitoring result as a response to the request message for collecting the information on the energy consumption.

Meanwhile, according to an embodiment of the present disclosure, a method performed by a session management function (SMF) entity in a wireless communication system may include: receiving a message for energy monitoring from a first entity for collecting information on energy consumption; transmitting the message for the energy monitoring to a user plane function (UPF); and transmitting a response message for the energy monitoring to the first entity, upon receiving a response message from the UPF as a response to the message for the energy monitoring.

Meanwhile, according to an embodiment of the present disclosure, a first entity for collecting information on energy consumption in a wireless communication system may include: a transceiver; and a controller controlling to receive a request message for collecting the information on the energy consumption from a second entity through the transceiver, transmit a message for energy monitoring to a session management function (SMF) entity through the transceiver, receive a response message for the energy monitoring from the SMF entity through the transceiver, and transmit a response message including an energy monitoring result as a response to the request message for collecting the information on the energy consumption through the transceiver.

Meanwhile, according to an embodiment of the present disclosure, a session management function (SMF) entity in a wireless communication system may include: a transceiver; and a controller controls to receive a message for energy monitoring from a first entity for collecting information on energy consumption through the transceiver, transmit the message for the energy monitoring to a user plane function (UPF) through the transceiver, and transmit a response message for the energy monitoring to the first entity through the transceiver, upon receiving a response message from the UPF as a response to the message for the energy monitoring.

### [Advantageous Effect]

According to an embodiment of the present disclosure, a method for monitoring energy usage proposed in the present disclosure allows a network operator to provide a third party with the function to monitor energy usage generated in a contracted network.

### [Description of Drawings]

FIG. 1 is a diagram illustrating 5G system architecture according to an embodiment of the present disclosure.
FIG. 2 is a diagram illustrating a method for performing energy monitoring in a UPF according to an embodiment of the present disclosure.
FIG. 3 is a diagram illustrating a method for performing energy monitoring in a RAN according to an embodiment of the present disclosure.
FIG. 4 is a diagram illustrating a method for performing energy monitoring for each S-NSSAI or each DNN according to an embodiment of the present disclosure.
FIG. 5A is a diagram illustrating a method for monitoring energy for QoS Flow(s) according to an embodiment of the present disclosure.
FIG. 5B is a diagram illustrating the method for monitoring energy for QoS Flow(s) according to an embodiment of the present disclosure.
FIG. 6 is a block diagram illustrating a structure of an entity performing a network function (NF) according to an embodiment of the present disclosure.
FIG. 7 is a block diagram illustrating a structure of an apparatus according to an embodiment of the present disclosure.

### [Mode for Disclosure]

Hereinafter, preferred embodiments of the present disclosure will be described in detail with reference to the accompanying drawings. In this case, it is to be noted that like reference numerals denote like components in the accompanying drawings. In addition, detailed descriptions of well-known functions and configurations that may obscure the essence of the present disclosure will be omitted.

In describing the embodiments of the present disclosure, descriptions of technical contents that are well known in the technical field to which the present disclosure pertains and are not directly related to the present disclosure will be omitted. This is to more clearly convey the gist of the present disclosure without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of embodiments with reference to the accompanying drawings. However, the present disclosure is not limited to embodiments to be described below, but may be implemented in various different forms, these embodiments will be provided only in order to make the present disclosure complete and allow those skilled in the art to completely recognize the scope of the present disclosure, and the present disclosure will be defined by the scope of the claims. Throughout the specification, like reference numerals denote like components.

In this case, it will be appreciated that each block of processing flowcharts and combinations of the flowcharts may be executed by computer program instructions. Since these computer program instructions may be mounted in a processor of a general computer, a special computer, or other programmable data processing apparatuses, these computer program instructions executed through the processor of the computer or other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory may also produce manufacturing articles including instruction means performing the functions described in the block(s) of the flowchart. Since the computer program instructions may also be mounted on the computer or other programmable data processing apparatuses, the instructions performing a series of operation steps on the computer or other programmable data processing apparatuses to create processes executed by the computer, thereby instructions executing the computer or other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

In this case, the term '~unit' used in the present embodiment means software or hardware components such as field programmable gate array (FPGA) or application specific integrated circuit (ASIC), and the '~unit' performs certain roles. However, the '~unit' is not meant to be limited to the software or hardware. The '~unit' may be configured to be stored in a storage medium that can be addressed or may be configured to reproduce one or more processors. Accordingly, as an example, the '~unit' refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit.' In addition, components and '~ units' may be implemented to reproduce one or more CPUs in a device or a secure multimedia card.

Hereinafter, a base station is an entity that performs resource assignment of a terminal, and may be at least one of a Node B, a base station (BS), an eNode B (eNB), a gNode B (gNB), a wireless access unit, a base station controller, or a node on a network. The terminal may include user equipment (UE), a mobile station (MS), 5G UE, a cellular phone, a smartphone, a computer, or a multimedia system capable of performing a communication function. In addition, the embodiment of the present disclosure may be applied to other communication systems with similar technical backgrounds or channel formats to the embodiment of the present disclosure described below. In addition, the embodiment of the present disclosure may be applied to other communication systems through certain modifications, as determined by those skilled in the art, without significantly departing from the scope of the present disclosure. For example, the 5th generation (5G) mobile communication technology (new radio, NR) developed after LTE-A may be included in such other communication systems, and the 5G below may also be a concept that includes the existing LTE, LTE-A, and other similar services. In addition, the present disclosure may be applied to other communication systems through certain modifications, as determined by those skilled in the art, without significantly departing from the scope of the present disclosure.

In the following description, terms used to identify connection nodes, terms referring to network entities or network functions (NFs), terms referring to messages, terms referring to interfaces between network entities, terms referring to various pieces of identification information, etc., are examples for convenience of description. Accordingly, the present disclosure is not limited to terms described below, and other terms referring to objects having equivalent technical meanings may be used.

For convenience of description below, some terms and names defined in the 3GPP (3rd generation partnership project) LTE (long term evolution) standard and/or 3GPP NR (new radio) standard may be used. However, the present disclosure is not limited to the terms and names, and may be equally applied to systems conforming to other standards.

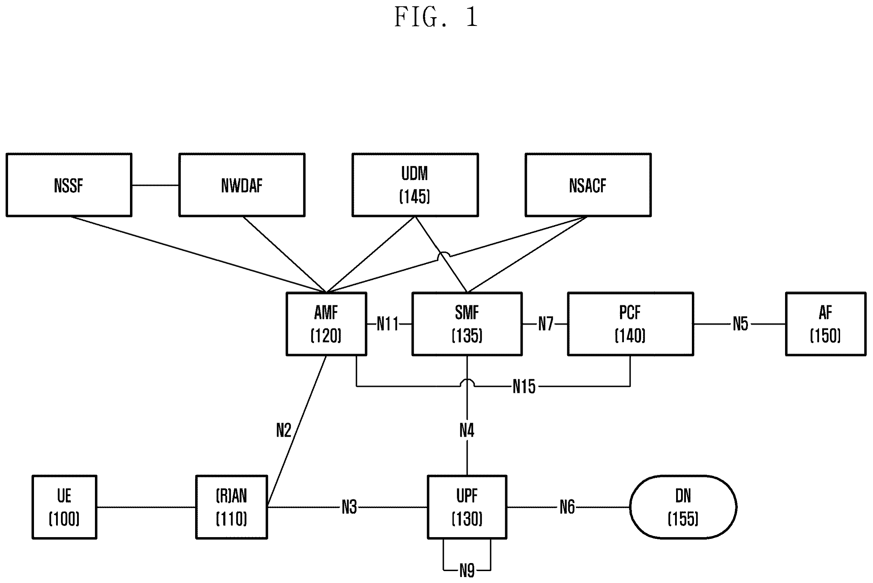

FIG. 1 illustrates 5G system architecture according to an embodiment of the present disclosure.

A 5G mobile communication network is configured with 5G user equipment (UE) (terminal) 100, a 5G radio access network (RAN) (base station, 5G nodeB (gNB), evolved nodeB (eNB), etc.) 110, and a 5G core network. The 5G core network may be configured with network functions (NFs) that include as an access and mobility management function (AMF) 120 providing a mobility management function of a UE, a session management function (SMF) 135 providing a session management function, a user plane function (UPF) 130 performing a data transfer role, a policy control function (PCF) 140 providing a policy control function, a unified data management (UDM) 145 providing a data management function such as subscriber data and policy control data, and a unified data repository (UDR) storing data of various network functions (NFs) such as UDM, etc.

In the 3GPP system, a conceptual link connecting between NFs in the 5G system is defined as a reference point. The following illustrates the reference points included in the 5G system architecture represented in FIG. 1.
- N1: Reference point between the UE 100 and the AMF 120
- N2: Reference point between the (R)AN 110 and the AMF 120
- N3: Reference point between the (R)AN 110 and the UPF 130
- N4: Reference point between the SMF 135 and the UPF 130
- N5: Reference point between the PCF 140 and an AF 150
- N6: Reference point between the UPF 130 and a DN 155
- N7: Reference point between the SMF 135 and the PCF 140
- N8: Reference point between the UDM 145 and the AMF 120
- N9: Reference point between two core UPFs 130
- N10: Reference point between the UDM 145 and the SMF 135
- N11: Reference point between the AMF 120 and the SMF 135
- N12: Reference point between the AMF 120 and an authentication server function (AUSF)
- N13: Reference point between the UDM 145 and the AUSF
- N14: Reference point between two AMFs 120
- N15: For a non-roaming scenario, reference point between the PCF 140 and the AMF 120; and for a roaming scenario, reference point between the PCF 140 and the AMF 120 in a visited network.

In the 5G system, a network slicing technology indicates a technology and architecture that enables multiple virtualized, independent, logical networks within a single physical network. A network operator configures a virtual end-to-end network called a network slice to provide services to satisfy specialized requirements of services/applications. In this case, the network slice is distinguished by an identifier called single-network slice selection assistance information (S-NSSAI). The network transmits a set of allowed slices (e.g., allowed NSSAI(s)) to a UE during, for example, a UE registration procedure, and the UE transmits and receives application data via a protocol data unit (PDU) session generated through one S-NSSAI (e.g., network slice) among the received set of slices.

According to an embodiment of the present disclosure, a method for monitoring energy usage in a 5G system is proposed. When energy usage monitoring is activated, the energy monitoring function may collect energy usage information from targeted entities (e.g., user equipments (UEs), radio access networks (RANs), and/or user plane functions (UPFs)). In this case, the energy monitoring function may be activated for each UE or each network slice.

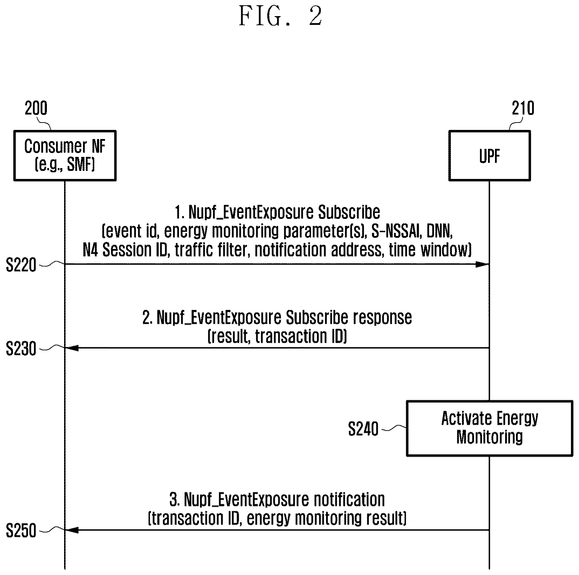

Meanwhile, FIG. 2 is a diagram illustrating a method for performing energy monitoring in a UPF according to an embodiment of the present disclosure.

First, in step 1 of S220, a consumer NF 200 (e.g., an SMF) may transmit, to a UPF 210, a request to monitor energy monitoring-related information.

The message for the request may include at least one of the following parameters:
- event id: It may include an event id corresponding to energy monitoring (EM) or an indicator requesting EM.
- energy monitoring parameter(s): It may include parameter(s) to be monitored. For example, the parameters to be monitored may include energy consumption (EC) or energy consumption rate (ECR), etc.

The EC may indicate energy consumption for providing a service or energy usage for providing a service per unit time.

The ECR may indicate an energy consumption rate, a consumption speed, or a bitrate (e.g., UL bitrate, DL bitrate, or the sum of UL/DL bitrates) for providing a service.
- target monitoring information: It may include information indicating an energy monitoring target.
- S-NSSAI, DNN: When the consumer NF 200 requests energy monitoring for the service identified by the S-NSSAI and/or DNN, the consumer NF 200 may include the S-NSSAI (slice identifier information) and the DNN (data network identifier information).
- N4 session ID: When the consumer NF 200 requests energy monitoring for a specific/arbitrary/preconfigured PDU session, the consumer NF 200 may include a PDU session ID (PDU session identifier information) or an N4 session ID (session identifier information between the UPF and the SMF for the PDU session) of the PDU session.
- traffic filter: When the consumer NF 200 requests energy monitoring for traffic with a specific/arbitrary/preconfigured destination address, the consumer NF 200 may include information such as a destination IP address, a destination port number, and a protocol type.
- notification address: It indicates an address to receive energy monitoring notification.
- location information: When the consumer NF 200 requests energy monitoring for a specific/arbitrary/preconfigured area, it may include corresponding area information. For example, the location information may include cell identifier(s), tracking area (TA) identifier(s), geographical information (e.g., a name of a specific area, etc.).
- time window: When the consumer NF 200 requests energy monitoring for a time window, it may include corresponding time information. For example, the corresponding time information may include a monitoring start time, a monitoring end time, a monitoring duration, etc.
- Reporting frequency: It may indicate an energy monitoring message notification cycle.
- EC reporting threshold: It may be included when notification is required that the EC has reached a specific level (for example, a threshold).
- ECR reporting threshold: It may be included when notification is required that the ECR has reached a specific level (for example, a threshold).

In step 2 of S230, when the UPF 210 receives a message of step 1, the UPF 210 may transmit a response message to the consumer NF 200, including at least one of the following pieces of information:
- result: It may indicate success or failure. The UPF 210 may indicate success when the energy monitoring is possible for the target monitoring information included in step 1 and/or for the location information and time information included in step 1.
- transaction ID: It indicates an identifier for a connection for the energy monitoring between the consumer NF 200 and the UPF 210. When receiving the message of step 1 from the consumer NF 200, the UPF 210 may generate a transaction ID.

In step S240, the UPF 210 may activate the energy monitoring.

According to an embodiment of the present disclosure, when the message of step 1 includes a time window, the UPF 210 may activate the energy monitoring during the corresponding time window.

According to an embodiment of the present disclosure, when the UPF 210 determines to perform the energy monitoring for the request of step 1, the UPF 210 may activate the energy monitoring for traffic related to the parameter(s) included in the target information within the UPF 210.

According to an embodiment of the present disclosure, when the target information includes the S-NSSAI, DNN, the UPF 210 may start measuring EC (or ECR) for the PDU session(s) corresponding to the corresponding S-NSSAI and/or DNN.

According to an embodiment of the present disclosure, when the target information includes the N4 session ID, the UPF 210 may start measuring the EC (or ECR) for the user plane traffic processing (e.g., packet forwarding, etc.) for the corresponding N4 session ID.

According to an embodiment of the present disclosure, when the target information includes a traffic filter, the UPF 210 may start measuring EC (or ECR) for user plane traffic processing (e.g., packet forwarding, etc.) for a packet detection rule(s) (PDRs).

In step 3 of S250, when the energy monitoring is activated in S240, the UPF 210 may determine to transmit a notification message to the consumer NF 200 based on the information included in the message received in step 1.

According to an embodiment of the present disclosure, the UPF 210 may transmit a notification message for energy monitoring periodically or based on an event.

According to an embodiment of the present disclosure, when a reporting frequency exists for the energy monitoring, the UPF 210 may transmit the notification message based on the corresponding cycle.

According to an embodiment of the present disclosure, when the EC reporting threshold exists for the energy monitoring, the UPF 210 may transmit the notification message when the EC has reached the EC reporting threshold.

According to an embodiment of the present disclosure, when the ECR reporting threshold exists for the energy monitoring, the UPF 210 may transmit the notification message when the ECR has reached the ECR reporting threshold.

According to an embodiment of the present disclosure, when the message received in step 1 includes at least one of the reporting frequency, the EC reporting threshold, or the ECR reporting threshold, the UPF 210 may determine when to transmit the notification message based on at least one of the reporting frequency, the EC reporting threshold, or the ECR reporting threshold.

According to an embodiment of the present disclosure, when the message received in step 1 does not include at least one of the reporting frequency, the EC reporting threshold, or the ECR reporting threshold, the UPF 210 may determine when to transmit the notification message based on at least one of the reporting frequency, the EC reporting threshold, or the ECR reporting threshold.

According to an embodiment of the present disclosure, the UPF 210 may include the following information in the notification message transmitted to the consumer NF 200:
- transaction ID: It indicates the identifier for the connection for the energy monitoring between the consumer NF 200 and the UPF 210.
- energy monitoring result:
- Depending on the energy monitoring request, it may include the EC, the ECR, or both the EC and ECR.
- It may include information indicating that the ECR reporting threshold or the EC reporting threshold has been reached.

The consumer NF 200 (e.g., SMF) may receive an energy monitoring notification message including the EC or ECR, and then, when the EC or ECR reaches a predefined total EC threshold or total ECR threshold, may determine to restrict an allowable bitrate for the energy monitoring target traffic (e.g., the traffic related to the information included in the target information of step 1), etc.

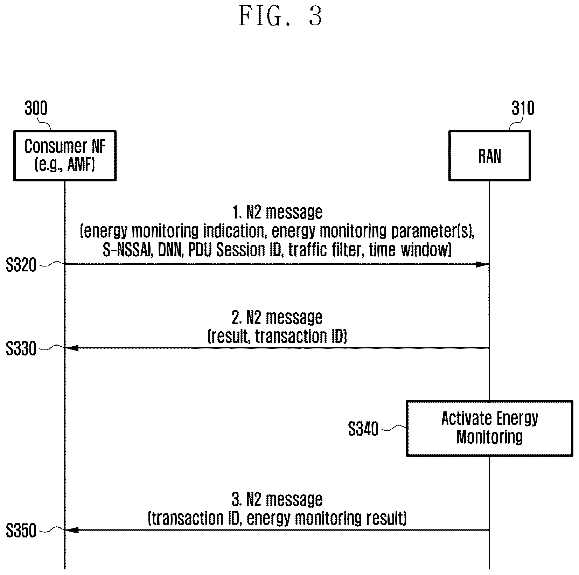

Meanwhile, FIG. 3 is a diagram illustrating a method for performing energy monitoring in a RAN according to an embodiment of the present disclosure.

First, in step 1 of S320, a consumer NF 300 (e.g., an AMF) may transmit, to a RAN 310, a request to monitor energy monitoring-related information.

The message for the request may include at least one of the following parameters:
- event id: It may include an event id corresponding to energy monitoring (EM) or an indicator requesting EM.
- energy monitoring parameter(s): It may include parameter(s) to be monitored. For example, the parameters to be monitored may include energy consumption (EC) or energy consumption rate (ECR), etc.

The EC may indicate energy consumption for providing a service or energy usage for providing a service per unit time.

The ECR may indicate an energy consumption rate, a consumption speed, or a bitrate (e.g., UL bitrate, DL bitrate, or the sum of UL/DL bitrates) for providing a service.
- target monitoring information: It may include information indicating an energy monitoring target.
- S-NSSAI, DNN: When the consumer NF 300 requests energy monitoring for the service identified by the S-NSSAI and/or DNN, the consumer NF 300 may include the S-NSSAI (slice identifier information) and the DNN (data network identifier information).
- PDU session ID: When the consumer NF 300 requests the energy monitoring for a specific/arbitrary/preconfigured PDU session, the consumer NF 300 may include a PDU session ID .
- traffic filter: When the consumer NF 300 requests energy monitoring for traffic with a specific/arbitrary/preconfigured destination address, the consumer NF 300 may include information such as a destination IP address, a destination port number, and a protocol type.
- notification address: It indicates an address to receive energy monitoring notification.
- location information: When the consumer NF 300 requests energy monitoring for a specific/arbitrary/preconfigured area, it may include corresponding area information. For example, the location information may include cell identifier(s), tracking area (TA) identifier(s), geographical information (e.g., a name of a specific area, etc.).
- time window: When the consumer NF 300 requests energy monitoring for a time window, it may include corresponding time information. For example, the corresponding time information may include a monitoring start time, a monitoring end time, a monitoring duration, etc.
- Reporting frequency: It may indicate an energy monitoring message notification cycle.
- EC reporting threshold: It may be included when notification is required that the EC has reached a specific level (for example, a threshold).
- ECR reporting threshold: It may be included when notification is required that the ECR has reached a specific level (for example, a threshold).

In step 2 of S330, when receiving the message of step 1, the RAN 310 may transmit a response message to the consumer NF 300, including at least one of the following pieces of information:
- result: It may indicate success or failure. The RAN 310 may indicate success when the energy monitoring is possible for the target monitoring information included in step 1 and/or for the location information and time information included in step 1.
- transaction ID: It indicates the identifier for the connection for the energy monitoring between the consumer NF 300 and the RAN 310. When receiving the message of step 1 from the consumer NF 300, the RAN 310 may generate a transaction ID.

In step S340, the RAN 310 may activate the energy monitoring.

According to an embodiment of the present disclosure, when the message of step 1 includes a time window, the RAN 310 may activate the energy monitoring during the corresponding time window.

According to an embodiment of the present disclosure, when the RAN 310 determines to perform the energy monitoring for the request of step 1, the RAN 310 may activate the energy monitoring for traffic related to the parameter(s) included in the target information within the RAN 310.

According to an embodiment of the present disclosure, when the target information includes the S-NSSAI, DNN, the RAN 310 may start measuring EC (or ECR) for the PDU session(s) corresponding to the corresponding S-NSSAI and/or DNN.

According to an embodiment of the present disclosure, when the target information includes the PDU session ID, the RAN 310 may start measuring the EC (or ECR) for the user plane traffic processing (e.g., packet forwarding, etc.) for the corresponding PDU session ID and/or energy (e.g., energy used during wireless communication, etc.) used for traffic transmission/reception for the corresponding PDU session ID.

According to an embodiment of the present disclosure, when the target information includes the traffic filter, the RAN 310 may start measuring EC (or ECR) for the user plane traffic processing (e.g., packet forwarding, etc.) for the traffic filter and/or energy (e.g., energy used during wireless communication, etc.) used for traffic transmission/reception.

In step 3 of S350, when the energy monitoring is activated in S340, the RAN 310 may determine to transmit a notification message to the consumer NF 300 based on the information included in the message received in step 1.

According to an embodiment of the present disclosure, the RAN 310 may transmit a notification message for energy monitoring periodically or based on an event.

According to an embodiment of the present disclosure, when a reporting frequency exists for the energy monitoring, the RAN 310 may transmit the notification message based on the corresponding cycle.

According to an embodiment of the present disclosure, when the EC reporting threshold exists for the energy monitoring, the RAN 310 may transmit the notification message when the EC has reached the EC reporting threshold.

According to an embodiment of the present disclosure, when the ECR reporting threshold exists for the energy monitoring, the RAN 310 may transmit the notification message when the ECR has reached the ECR reporting threshold.

According to an embodiment of the present disclosure, when the message received in step 1 includes at least one of the reporting frequency, the EC reporting threshold, or the ECR reporting threshold, the RAN 310 may determine when to transmit the notification message based on at least one of the reporting frequency, the EC reporting threshold, or the ECR reporting threshold.

According to an embodiment of the present disclosure, when the message received in step 1 does not include at least one of the reporting frequency, the EC reporting threshold, or the ECR reporting threshold, the RAN 310 may determine when to transmit the notification message based on at least one of the reporting frequency, the EC reporting threshold, or the ECR reporting threshold.

According to an embodiment of the present disclosure, the RAN 310 may include the following information in the notification message transmitted to the consumer NF 300:
- transaction ID: It indicates the identifier for the connection for the energy monitoring between the consumer NF 300 and the RAN 310.
- energy monitoring result:
- Depending on the energy monitoring request, it may include the EC, the ECR, or both the EC and ECR.
- It may include information indicating that the ECR reporting threshold or the EC reporting threshold has been reached.

The consumer NF 300 (e.g., AMF) may receive an energy monitoring notification message including the EC or ECR, and then, when the EC or ECR reaches a predefined total EC threshold or total ECR threshold, may determine to restrict an allowable bitrate for the energy monitoring target traffic (e.g., the traffic related to the information included in the target information of step 1), etc.

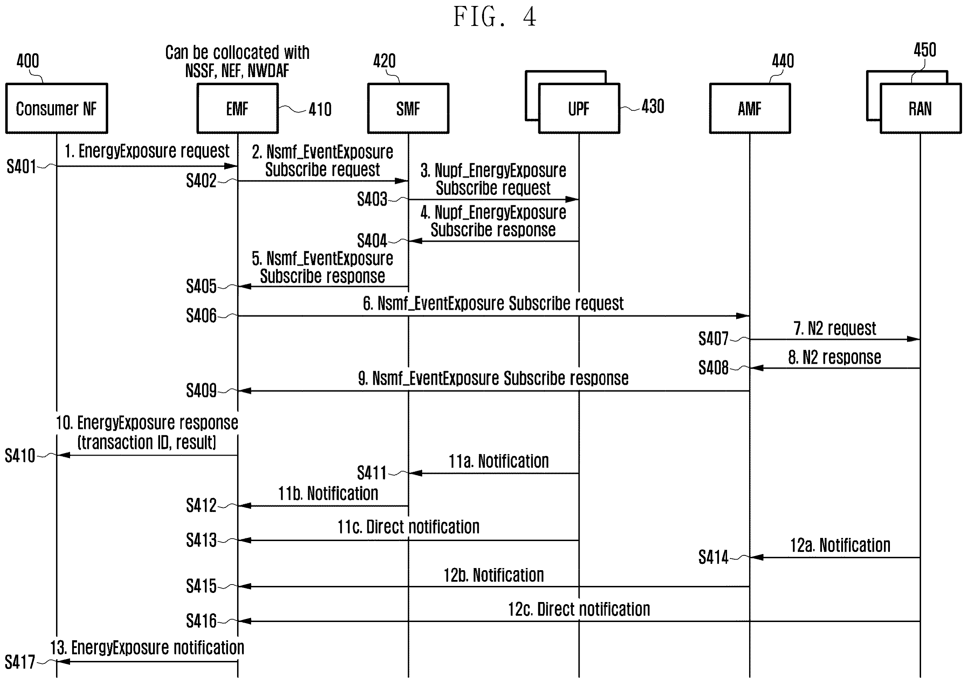

Meanwhile, FIG. 4 is a diagram illustrating a method for performing energy monitoring for each S-NSSAI or each DNN according to an embodiment of the present disclosure.

First, in step 1 of S401, a consumer NF 400 may transmit a request for energy monitoring to an energy monitoring function (EMF) 410. According to an embodiment, the EMF 410 may be located in an NEF, a PCF, an NWDAF, or an OAM.

The message for the request may include one or more of the following pieces of information:
- event id: An event id corresponding to energy monitoring (EM) or an indicator requesting EM may be included in the message for the request.
- energy monitoring parameter(s): It may include parameter(s) to be monitored. For example, the parameters to be monitored, which include the energy consumption (EC), the energy consumption rate (ECR), etc., may be included in the message for the request.

The EC may indicate energy consumption for providing a service or energy usage for providing a service per unit time.

The ECR may indicate the energy consumption rate or consumption speed for providing the service, or the bitrate (e.g., UL bitrate, DL bitrate, or the sum of UL/DL bitrates) for the service.
- target monitoring information: Information indicating the energy monitoring target may be included in the message for the request.
- S-NSSAI, DNN or AF-service-Identifier: When the consumer NF 400 requests energy monitoring for the service identified by the S-NSSAI and/or DNN, the consumer NF 400 may include the S-NSSAI (slice identifier information) and the DNN (data network identifier information) in the message for the request. Instead of the S-NSSAI or DNN, the AF-service-identifier (an identifier that may identify the AF service) may also be included in the message of the request.
- traffic filter: When the consumer NF 400 requests energy monitoring for traffic with a specific/arbitrary/preconfigured destination address, the consumer NF 400 may include information such as a destination IP address, a destination port number, and a protocol type in the message for the request.
- notification address: It indicates an address to receive energy monitoring notification.
- location information: When the consumer NF 400 requests energy monitoring for a specific/arbitrary/preconfigured area, the corresponding area information may be included in the message for the request. For example, cell identifier(s), tracking area (TA) identifier(s), geographical information (e.g., a name of a specific area, etc.) may be included in the message for the request.
- time window: When the consumer NF 400 requests the energy monitoring for the time window, the corresponding time information may be included in the message for the request. For example, the corresponding time information may include the monitoring start time, the monitoring end time, the monitoring duration, etc.
- Reporting frequency: It may indicate an energy monitoring message notification cycle.
- EC reporting threshold: It may be included when notification is required that the EC has reached a specific level (for example, a threshold).
- ECR reporting threshold: It may be included in the message for the request when notification is required that the ECR has reached a specific level (for example, a threshold).

In step 2 of S402, when receiving the message of step 1, the EMF 410 may determine to perform monitoring for the S-NSSAI (or DNN) included in the target monitoring information.

According to an embodiment of the present disclosure, when the message of step 1 includes an AF-service-identifier, the EMF 410 may find out the corresponding S-NSSAI based on the configuration information.

The EMF 410 may transmit the message for the energy monitoring to the SMF 420 for the S-NSSAI. The EMF 410 may also acquire an SMF address for the S-NSSAI/DNN via the UDM 145. The message for the energy monitoring may include at least one of the following pieces of information:
- event id: It may include an event id corresponding to energy monitoring (EM) or an indicator requesting EM.
- energy monitoring parameter(s): It may include the corresponding information included in the message received in step 1.
- target monitoring information: It may include information indicating an energy monitoring target.
- S-NSSAI, DNN or AF-service-Identifier: When the consumer NF 400 requests energy monitoring for the service identified by the S-NSSAI and/or DNN, the consumer NF 400 may include the S-NSSAI (slice identifier information) and the DNN (data network identifier information) in the message for the energy monitoring. Instead of the S-NSSAI or DNN, the AF-service-identifier (the identifier that may identify the AF service) may also be included.
- traffic filter: When the consumer NF 400 requests energy monitoring for traffic with a specific destination address, the consumer NF 400 may include information such as a destination IP address, a destination port number, and a protocol type in the message for the energy monitoring.
- notification address: It may indicate an address to receive energy monitoring notification. Here, the EMF 410 may include the address to receive the energy monitoring in the message for the energy monitoring.
- location information: It may include information regarding an area covered by the SMF 420, among the location information received in step 1. For example, cell identifier(s) and tracking area (TA) identifier(s) may be included in the message for the energy monitoring.
- time window: Information on the time window received in step 1 may be included in the message for the energy monitoring.
- Reporting frequency: It may indicate an energy monitoring message notification cycle.
- EC reporting threshold: It may be included when notification is required that the EC has reached a specific level (for example, a threshold). For example, it may include the EC reporting threshold received in step 1. According to an embodiment, when there are multiple SMFs to which the EMF 410 transmits messages, the EC reporting threshold received in step 1 may be a value distributed by the EMF 410 to each SMF.
- ECR reporting threshold: It may be included when notification is required that the ECR has reached a specific level (for example, a threshold). For example, it may include the ECR reporting threshold received in step 1. According to an embodiment, when there are multiple SMFs to which the EMF 410 transmits messages, the ECR reporting threshold received in step 1 may be a value distributed by the EMF 410 to each SMF.

In steps 3 and 4 of S403 and S404, when receiving the message of step 2, the SMF 420 may transmit the message for the energy monitoring to the UPF 430. The UPF 430 may then transmit a response message corresponding to the message for the energy monitoring to the SMF 420.

Steps 3 and 4 may refer to steps 1 and 2 of the embodiment in which the consumer NF is the SMF in FIG. 2.

According to an embodiment of the present disclosure, when there are multiple UPFs 430 to which the SMF 420 transmits messages, the EC reporting threshold received by the SMF 420 in step 2 may be a value that is distributed for each UPF.

According to an embodiment of the present disclosure, when there are multiple UPFs 430 to which the SMF 420 transmits messages, the ECR reporting threshold received by the SMF 420 in Step 2 may be a value that is distributed for each UPF.

In step 5 of S405, when receiving the response message in step 4 from the UPF 430, the SMF 420 may transmit a response message for step 2 to the EMF 410. The response message may include at least one of the following pieces of information:
- result: It may indicate success or failure. The SMF 420 may determine success or failure based on the result included in the message received from at least one UPF 430 in step 4. For example, when a result indicating success is received for all UPFs 430, it may include a success message.
- transaction ID: It may indicate an identifier for a connection for the energy monitoring between the EMF 410 and the SMF 420.

In step 6 of S406, the EMF 410 may transmit the message for the energy monitoring to the AMF 440 for the S-NSSAI. The message for the request may include the same information as in step 2.

In steps 7 and 8 of S407 and S408, when receiving the message of step 6, the AMF 440 may transmit an N2 message to the RAN 450. Steps 7 and 8 may refer to steps 1 and 2 of the embodiment in which the consumer NF is the AMF in FIG. 3.

In step 9 of S409, the AMF 440 may transmit a response message for step 6 to the EMF 410. The response message may include at least one of the following pieces of information:
- result: It may indicate success or failure. The AMF 440 may determine success or failure based on the result included in the message received from at least one RAN 450 in step 8 of S408. For example, when a result indicating success is received for all RANs, it may include a success message.
- transaction ID: It indicates the identifier for the connection for the energy monitoring between the EMF 410 and the AMF 440.

In step 10 of S410, the EMF 410 may transmit a response message for step 1 to the consumer NF 400. The response message may include at least one of the following pieces of information:
- result: It may indicate success or failure. The success or failure may be determined based on the result included in the message received in steps 5 and 9.
- transaction ID: It may indicate the identifier for the connection for the energy monitoring between the consumer NF 400 and the EMF 410.

Step 11a of S411 may refer to step 3 of the embodiment in which the consumer NF is the SMF in FIG. 2. For example, in step 11a, at least one UPF 430 may transmit a notification message to the SMF 420.

According to an embodiment of the present disclosure, in step 11b of S412, when receiving the notification message from the UPF 430, the SMF 420 may transmit, to the EMF 410, a message including at least one of the following pieces of information:
- transaction ID: It indicates the identifier for the connection.
- energy monitoring result:
- Depending on the energy monitoring request, it may include the EC, the ECR, or both the EC and ECR.
- It may include Information indicating that the ECR reporting threshold or the EC reporting threshold has been reached.
- time: It may include information on time at which the EC or ECR is generated.
- In step 11c of S413, when the notification address received by the UPF 430 from the SMF 420 in step 3 includes the address of the EMF 410, the UPF 430 may directly transmit the notification to the EMF 410.

In step 12a of S414, reference may be made to step 3 of the embodiment in which the consumer NF is the AMF in FIG. 3.

In step 12b of S415, the AMF 440 may transmit the notification message to the EMF 410. The notification message may include at least one of the following pieces of information:
- transaction ID: It indicates the identifier for the connection.
- energy monitoring result:
- Depending on the energy monitoring request, it may include the EC, the ECR, or both the EC and ECR.
- Information indicating that the ECR reporting threshold or the EC reporting threshold has been reached may be included in the notification message.
- time: Information on time at which the EC or ECR is generated may be included in the notification message.
- In step 12c of S416, when the notification address received by the RAN 450 from the AMF 440 in step 3 includes the address of the EMF 410, the RAN 450 may directly transmit the notification to the EMF 410.

In step 13 of S417, the EMF 410 may collect notifications received from the SMF 420 (or UPF 430) and/or the AMF 440 (or RAN 450) and transmit a notification to the consumer NF 400. When the ECR included in the received notification message indicates a bitrate, the EMF 410 may derive the ECR corresponding to the bitrate included in each message based on energy-related conversion information (e.g., for 1 Mbps, 2.5 J/s is consumed) for each bitrate. The EMF 410 may include the converted value in the notification message transmitted to the consumer NF 400.

In this case, the notification message may be transmitted periodically depending on configuration information or the information included in the message of step 1.

In this case, depending on configuration information or the information included in the message of step 1, the notification message may be transmitted when a specific EC or ECR is reached.

The notification message may include at least one of the following pieces of information:
- transaction ID: It indicates the identifier for the connection.
- energy monitoring result:
- Depending on the energy monitoring request, the EC, the ECR, or both the EC and ECR may be included in the notification message.
- Information indicating that the ECR reporting threshold or the EC reporting threshold has been reached may be included in the notification message.
- time: Information on time at which the EC or ECR is generated may be included in the notification message.

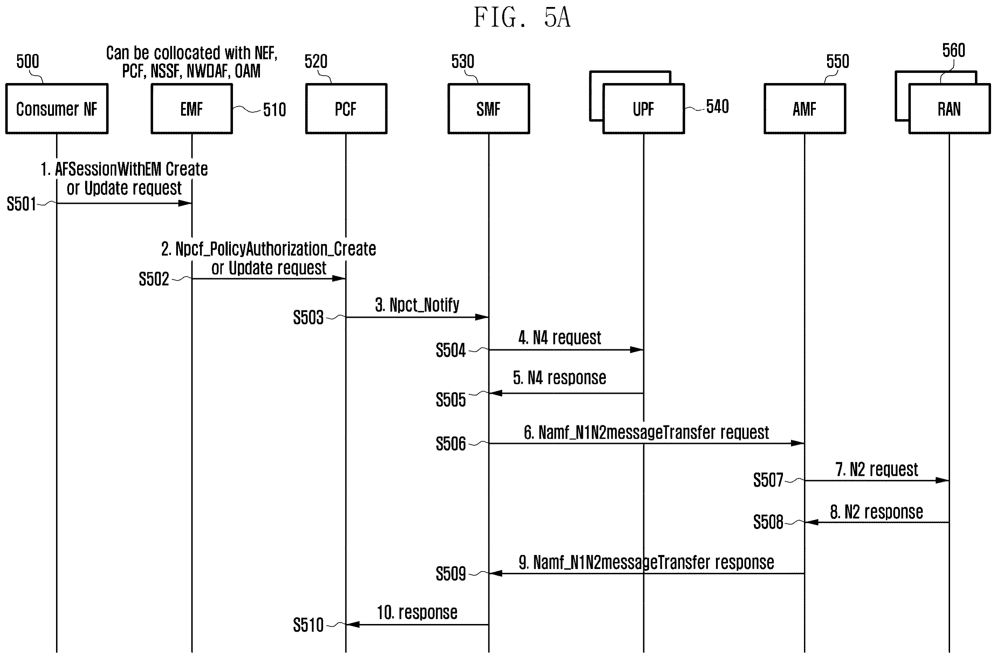

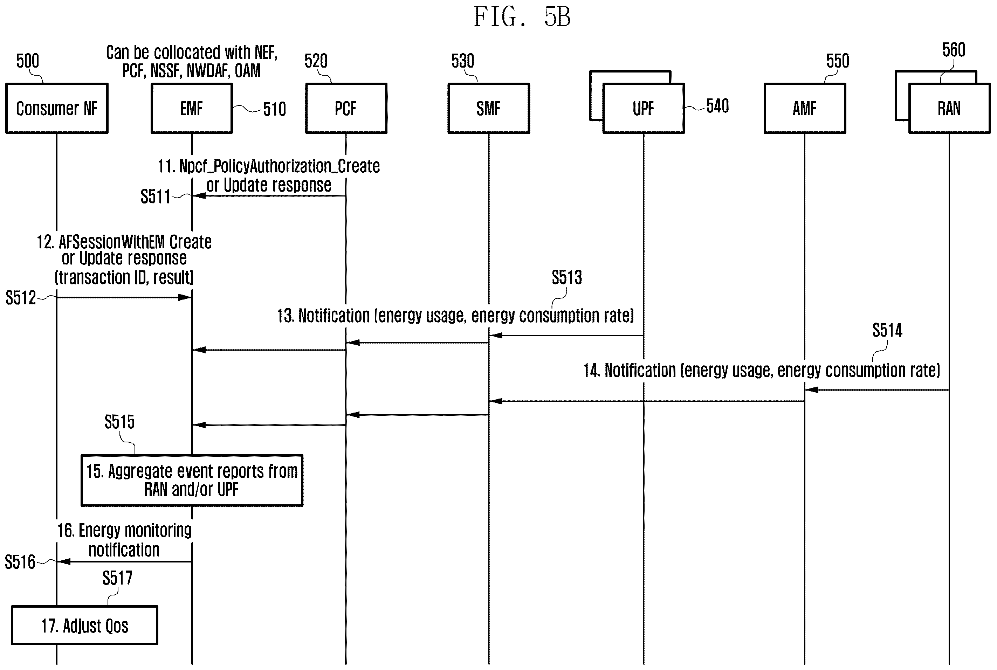

Meanwhile, FIGS. 5A and 5B illustrate a method for monitoring energy for QoS Flow(s).

In step 1 of S501, a consumer NF 500 may transmit a request for energy monitoring to an energy monitoring function (EMF) 510. In this case, the EMF 510 may be located in the NEF, PCF, NWDAF, or OAM.

For activating the energy monitoring for QoS Flow(s) to be newly generated, the request may be included in a create message and transmitted.

For activating the energy monitoring for QoS Flow(s) previously generated, the request may be included in an update message and transmitted. In this case, transaction ID(s) that may identify the existing QoS Flow(s) may be included.

The message for the request may include one of the following pieces of information:
- event id: It may include an event id corresponding to energy monitoring (EM) or an indicator requesting EM.
- energy monitoring parameter(s): It may include parameter(s) to be monitored. For example, the energy consumption (EC), the energy consumption rate (ECR), etc., may be included in the message for the request.

The EC may indicate energy consumption for providing a service or energy usage for providing a service per unit time.

The ECR may indicate an energy consumption rate, a consumption speed, or a bitrate (e.g., UL bitrate, DL bitrate, or the sum of UL/DL bitrates) for providing a service.
- target monitoring information: Information indicating a target to which the energy monitoring is to be applied may be included in the message for the request.
- S-NSSAI, DNN or AF-service-Identifier: When the consumer NF 500 requests energy monitoring for the service identified by the S-NSSAI and/or DNN, the consumer NF 500 may include the S-NSSAI (slice identifier information) and the DNN (data network identifier information). Instead of the S-NSSAI or DNN, the AF-service-identifier (an identifier that may identify the AF service) may also be included in the message of the request.
- traffic filter: When the consumer NF 500 requests energy monitoring for traffic with a specific destination address, the consumer NF 500 may include information such as a destination IP address, a destination port number, and a protocol type.
- UE ID(s), group ID(s): Identifier(s) of a UE or group identifier(s) representing multiple UEs may be included in the message for the request.
- notification address: It may indicate an address to receive energy monitoring notification.
- location information: When the consumer NF 500 requests energy monitoring for a specific/arbitrary/preconfigured area, the corresponding area information may be included in the message for the request. For example, cell identifier(s), tracking area (TA) identifier(s), geographical information (e.g., a name of a specific area, etc.) may be included in the message for the request.
- time window: When the consumer NF 500 requests the energy monitoring for the time window, the corresponding time information may be included in the message for the request. For example, the corresponding time information may include the monitoring start time, the monitoring end time, the monitoring duration, etc.
- Reporting frequency: It may indicate an energy monitoring message notification cycle.
- EC reporting threshold: It may be included when notification is required that the EC has reached a specific level (for example, a threshold).
- ECR reporting threshold: It may be included in the message for the request when notification is required that the ECR has reached a specific level (for example, a threshold).

In step 2 of S502, when receiving the message of step 1, the EMF 510 may determine to perform monitoring for the S-NSSAI (or DNN) included in the target monitoring information.

When the message of step 1 includes an AF-service-identifier, the EMF 510 may find out the corresponding S-NSSAI based on the configuration information.

The EMF 510 may identify/confirm the UE ID(s) for which the energy monitoring will be performed based on the target monitoring information received in step 1 and transmit a request message to at least one PCF(s) 520 responsible for the corresponding UE ID(s) to activate the energy monitoring.

The request message may be transmitted for each UE. The request message may include one or more of the following pieces of information:
- UE ID (UE IP address, SUPI, or GPSI)
- S-NSSAI, DNN
- traffic filter
- energy monitoring parameter(s) (e.g., EC or ECR), notification address, reporting frequency

In step 3 of S503, when there is the PDU session corresponding to the UE ID (or, if present, S-NSSAI, DNN) included in the message received in step 2, the PCF 520 may determine to activate the energy monitoring for the corresponding PDU session.

The PCF 520 may determine to activate the energy monitoring for the EC, the ECR, or both the EC and ECR based on the information received in step 2, and transmit the message for the energy monitoring activation to the SMF 530 to activate the energy monitoring.

The message for the energy monitoring activation may include at least one of the following pieces of information:
- SM Policy Association ID: Identifier for the policy for each PDU session
- energy monitoring parameter(s) (e.g., EC or ECR), notification address, and reporting frequency

In step 4 of S504, when receiving the message for the energy monitoring activation from the PCF 520, the SMF 530 may transmit an N4 message to the UPF 540 to activate the energy monitoring. The N4 message may include at least one of the following pieces of information:
- N4 session ID: N4 session identifier for each PDU session
- energy monitoring parameter(s)
- traffic filter

In step 5 of S505, when the information received from the PCF 520 includes the energy monitoring parameter(s), the UPF 540 may activate the energy monitoring for the PDU session (or corresponding N4 session) included in the message received in step 4.

According to an embodiment of the present disclosure, when the traffic filter is not present in the energy monitoring request message received from the SMF 530, the UPF 540 may activate the energy monitoring for all UL and DL traffic corresponding to the PDU session (or corresponding N4 session).

According to an embodiment of the present disclosure, when the traffic filter is present in the energy monitoring request message received from the SMF 530, the UPF 540 may activate the energy monitoring for traffic corresponding to the corresponding traffic filter among the PDU sessions (or corresponding N4 sessions).

The UPF 540 may transmit a response message for step 4, including the energy monitoring processing result (e.g., success or failure), to the SMF 530.

In step 6 of S506, the SMF 530 may transmit an N2 message to the RAN 560 via the AMF 550 to activate the energy monitoring.

In steps 7 and 8 of S507 and S508, when the message received in step 6 includes the N2 message, the AMF 550 may transmit the N2 message to the RAN 560 responsible for the PDU session included in the message received in step 6.

According to an embodiment of the present disclosure, steps 7 and 8 may refer to steps 1 and 2 of FIG. 3 described above.

In step 9 of S509, the AMF 550 may transmit the response message to the SMF 530.

In step 10 of S510, the SMF 530 may transmit a response message for step 3 to the PCF 520.

In step 11 of S511, when receiving the response message from the SMF 530, the PCF 520 may transmit a response message for step 2 to the EMF 510. The corresponding message may include information on whether the energy monitoring is successful for each UE.

In step 12 of S512, the EMF 510 may receive a message of step 11 from one or more PCFs, collect the corresponding information, and include the collected information in the response message transmitted to the consumer NF 500.

The response message may include the transaction ID and the information on whether the energy monitoring processing is successful for each UE.

In step 13 of S513, when the energy monitoring is activated, the UPF 510 may transmit the notification message to the EMF 510 via the SMF 530 and the PCF 520.

A part where the notification message is transmitted from the UPF 540 to the SMF 530 may refer to step 3 of FIG. 2 described above, in the case where the consumer NF is the SMF.

When receiving the message from the UPF 540, the SMF 530 may transmit, to the PCF 520, the message including at least one of the following pieces of information.
- SM policy association ID or PDU Session ID
- energy monitoring result:
- Depending on the energy monitoring request, it may include the EC, the ECR, or both the EC and ECR.
- Information indicating that the ECR reporting threshold or the EC reporting threshold has been reached may be included in the message.
- time: Information on time at which the EC or ECR is generated may be included in the message.

The PCF 520 may transmit the message received from the SMF 530 to the EMF 510. The corresponding message may include at least one of the following pieces of information:
- transaction ID
- energy monitoring result:
- Depending on the energy monitoring request, it may include the EC, the ECR, or both the EC and ECR.
- Information indicating that the ECR reporting threshold or the EC reporting threshold has been reached may be included in the message.
- time: Information on time at which the EC or ECR is generated may be included in the message.

In step 14 of S514, when the energy monitoring is activated, the RAN 530 may transmit the notification message to the EMF 510 via the AMF 550, the SMF 530, and the PCF 520.

The part where the notification message is transmitted from the RAN 560 to the AMF 550 may refer to step 3 of FIG. 3, in the case where the consumer NF is the AMF.

When receiving a message from the RAN 560, the AMF 550 may transmit the following messages to the SMF 530:
- PDU Session ID
- energy monitoring result:
- Depending on the energy monitoring request, it may include the EC, the ECR, or both the EC and ECR.
- Information indicating that the ECR reporting threshold or the EC reporting threshold has been reached may be included in the message.
- time: Information on time at which the EC or ECR is generated may be included in the message.

The SMF 530 may include the message received from the AMF 550 in the message transmitted to the EMF 510 via the PCF 520.

In step 15 of S515, the EMF 510 may collect notifications received from the SMF 530 (or UPF 510) and/or the AMF 550 (or RAN 530) and transmit a notification to the consumer NF 500 in step 16 of S516.

In this case, the EMF 510 may periodically transmit the notification message depending on the configuration information or the information included in the message of step 1.

In this case, depending on the configuration information or the information included in the message of step 1, the EMF 510 may transmit the notification message when a specific EC or ECR is reached.

The notification message may include at least one of the following pieces of information:
- transaction ID: It indicates the identifier for the connection.
- energy monitoring result:
- Depending on the energy monitoring request, the EMF 510 may include EC for each UE, ECR for each UE, or both EC/ECR for each UE.
- It may include information indicating that the ECR reporting threshold or the EC reporting threshold has been reached.
- time: It may include information on time at which the EC or ECR is generated.

In step 17 of S517, the consumer NF 500 may adjust QoS parameters (e.g., the UL bitrate and/or DL bitrate of the QoS Flow(s)) based on the information included in the message received in step 16.

For example, when the message of step 16 includes information indicating that the ECR reporting threshold or the EC reporting threshold has been reached, the consumer NF 500 may reduce the bitrate for the corresponding QoS Flows or request a release of some of the corresponding QoS Flows.

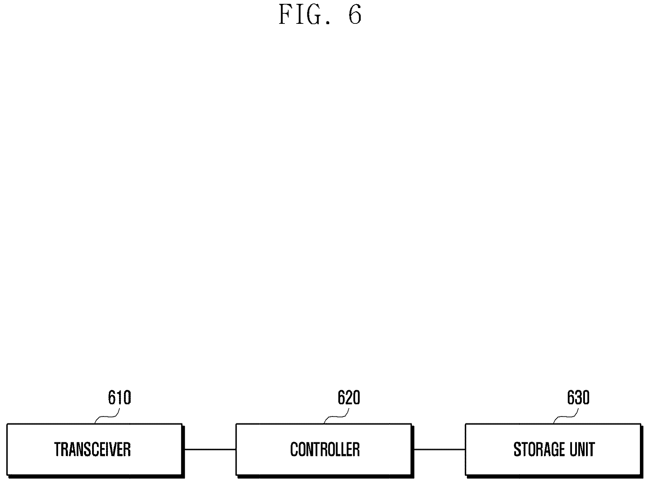

Meanwhile, FIG. 6 is a block diagram illustrating a structure of an entity performing a network function (NF) according to an embodiment of the present disclosure. According to an embodiment of the present disclosure, the NF entity of FIG. 6 may be an SMF entity as disclosed in FIG. 2 as a consumer NF, or an AMF entity as disclosed in FIG. 3.

Referring to FIG. 6, the NF entity may include a transceiver 610, a controller 620, and a storage 630. In the present disclosure, the controller may be defined as a circuit, an application-specific integrated circuit, or at least one processor.

The transceiver 610 may transmit and receive signals to and from other network entities. The transceiver 610 may transmit and receive messages according to an embodiment of the present disclosure, for example, to and from a UPF, a RAN, etc.

The controller 620 may control the overall operation of the NF entity according to an embodiment of the present disclosure. For example, the controller 620 may control a signal flow between each block to perform operations according to the flowchart described above. Specifically, the controller 620 may control to transmit a request for monitoring energy monitoring-related information including at least one of pieces of information according to an embodiment of the present disclosure.

The storage 630 may store at least one of the information transmitted and received through the transceiver 610 and the information generated by the controller 620.

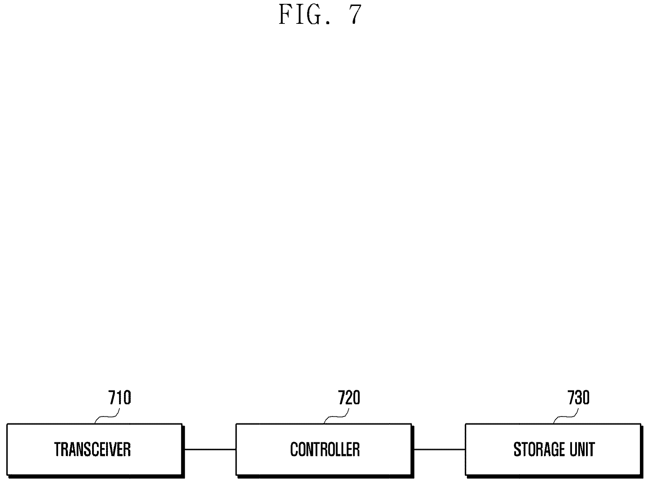

Meanwhile, FIG. 7 is a block diagram illustrating a structure of an apparatus according to an embodiment of the present disclosure. For example, the apparatus illustrated in FIG. 7 may be an apparatus that receives a request for energy monitoring from a consumer NF, such as the UPF or RAN, and activates energy monitoring.

Referring to FIG. 7, the apparatus may include a transceiver 710, a controller 720, and a storage 730. In the present disclosure, the controller may be defined as a circuit, an application-specific integrated circuit, or at least one processor.

The transceiver 710 may transmit and receive signals to and from other network entities. The transceiver 710 may transmit and receive messages according to an embodiment of the present disclosure, for example, to and from an SMF, an AMF, etc.

The controller 720 may control the overall operation of the apparatus according to an embodiment of the present disclosure. For example, the controller 720 may control a signal flow between each block to perform operations according to the flowchart described above. Specifically, when receiving a request to monitor energy monitoring-related information including at least one of pieces of information according to the embodiments of the present disclosure, the controller 720 may transmit a response to the request and control the energy monitoring to be activated.

The storage 730 may store at least one of the information transmitted and received through the transceiver 710 and the information generated by the controller 720.

Methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device. One or more programs include instructions for causing an electronic device to execute methods according to embodiments described in a claim or specification of the present disclosure.

Such programs (software modules, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, it may be stored in a memory composed of a combination of some or all thereof. In addition, each configuration memory may be included in plural.

In addition, the program may be stored in an attachable storage device that may accessed via a communication network such as the Internet, the Intranet, a local area network (LAN), wide LAN (WLAN), or a storage area network (SAN), or a combination thereof. Such a storage device may be connected to a device implementing an embodiment of the present disclosure via an external port. In addition, a separate storage device on the communication network may be connected to the device implementing the embodiment of the present disclosure.

In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the components may be configured in plural.

While the present disclosure has been described in connection with the exemplary embodiments thereof, various modifications and variations can be made without departing from the scope of the present disclosure. Therefore, the scope of the present disclosure should be not construed as being limited to the described exemplary embodiments but be defined by the appended claims as well as equivalents thereto.

## Claims

1. A method performed by a first entity for collecting information on energy consumption in a wireless communication system, the method comprising:
receiving a request message for collecting the information on the energy consumption from a second entity;
transmitting a message for energy monitoring to a session management function (SMF) entity;
receiving a response message for the energy monitoring from the SMF entity; and
transmitting a response message including an energy monitoring result as a response to the request message for collecting the information on the energy consumption.

2. The method of claim 1, wherein, when the SMF entity transmits a message for energy monitoring to a user plane function (UPF), and a response message is transmitted from the UPF to the SMF as response to the message for the energy monitoring, the response message for energy monitoring is received from the SMF entity.

3. The method of claim 1, wherein the request message for collecting the information on the energy consumption includes information on criteria for collecting the information on the energy consumption.

4. The method of claim 1, further comprising:
transmitting a request message requesting information on the SMF to a unified data management (UDM), in response to receiving the request message; and
acquiring information on the SMF from the UDM based on the request message.

5. The method of claim 1, wherein a response message including the energy monitoring result is transmitted to the second entity via a network exposure function (NEF).

6. A method performed by a session management function (SMF) entity in a wireless communication system, the method comprising:
receiving a message for energy monitoring from a first entity for collecting information on energy consumption;
transmitting the message for the energy monitoring to a user plane function (UPF); and
transmitting a response message for the energy monitoring to the first entity, upon receiving a response message from the UPF as a response to the message for the energy monitoring.

7. The method of claim 6, wherein the received message for energy monitoring is received when the first entity receives a request message for collecting the information on the energy consumption from a second entity, and
the request message for collecting the information on the energy consumption includes information on criteria for collecting the information on the energy consumption.

8. A first entity for collecting information on energy consumption in a wireless communication system, the first entity comprising:
a transceiver; and
a controller controlling to receive a request message for collecting the information on the energy consumption from a second entity through the transceiver,
transmit a message for energy monitoring to a session management function (SMF) entity through the transceiver,
receive a response message for the energy monitoring from the SMF entity through the transceiver, and
transmit a response message including an energy monitoring result as a response to the request message for collecting the information on the energy consumption through the transceiver.

9. The first entity of claim 8, wherein, when the SMF entity transmits a message for energy monitoring to a user plane function (UPF), and a response message is transmitted from the UPF to the SMF as response to the message for the energy monitoring, the response message for energy monitoring is received from the SMF entity.

10. The first entity of claim 8, wherein the request message for collecting the information on the energy consumption includes information on criteria for collecting the information on the energy consumption.

11. The first entity of claim 8, wherein the controller controls to transmit a request message requesting information on the SMF to a unified data management (UDM), in response to receiving the request message, and
acquire the information on the SMF based on the request message from the UDM.

12. The first entity of claim 8, wherein a response message including the energy monitoring result is transmitted to the second entity via a network exposure function (NEF).

13. A session management function (SMF) entity in a wireless communication system, the SMF entity comprising:
a transceiver; and
a controller controls to receive a message for energy monitoring from a first entity for collecting information on energy consumption through the transceiver,
transmit the message for the energy monitoring to a user plane function (UPF) through the transceiver, and
transmit a response message for the energy monitoring to the first entity through the transceiver, upon receiving a response message from the UPF as a response to the message for the energy monitoring.

14. The SMF entity of claim 13, wherein the received message for energy monitoring is received when the first entity receives a request message for collecting the information on the energy consumption from a second entity, and
the request message for collecting the information on the energy consumption includes information on criteria for collecting the information on the energy consumption.
